# EUROPEAN PATENT SPECIFICATION

(11) **EP 2 154 918 B1**
(45) Date of publication and mention of the grant of the patent: **01.02.2012**
(21) Application number: 08290771.8
(22) Date of filing: 13.08.2008
(51) Int. Cl.: H04W 24/04

(54) **Decentralised method of handling a cell outage in a radiocommunication network**
Dezentralisiertes Verfahren zur Handhabung eines Zellenausfalls in einem Funknetz
Procédé décentralisé pour le traitement d'une panne de cellule dans un réseau de radiocommunication

(43) Date of publication of application: 17.02.2010
(73) Proprietor: Alcatel Lucent, 75008 Paris (FR)
(72) Inventor: Ambrosy, Anton, Dr., 75233 Tiefenbronn (DE); Kühn, Edgar, Dr., 70563 Stuttgart (DE)
(74) Representative: Schmidt, Werner Karl

(56) References cited:
- WO-A-01/24557
- WO-A-2008/003755
- WO-A-2008/030171
- WO-A1-2009/078764
- NOKIA: "RRM distribution in LTE Architecture", 3GPP DRAFT; R3-060052 (RRM ARCHITECTURE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sophia Antipolis, France; 20060104, 4 January 2006 (2006-01-04), XP050158986, [retrieved on 2006-01-04]
- 3GPP TECHNICAL SPECIFICATION GROUP RADIO ACCESS NETWORK: "Evolved UTRA and UTRAN; Radio Access Archtecture and Interfaces (Release 7); 3GPP TR R3.018 V1.0.0", , 12 October 2007 (2007-10-12), Retrieved from the Internet: URL:ftp://ftp.3gpp.org/tsg_ran/WG3_Iu/R3_i nternal_TRs/R3.018_Evolved%20UTRA%20and%20 UTRAN/v1.0.0/ [retrieved on 2010-07-14]
- Frank Lehser ET AL: "NGMN Informative List of SON Use Cases v. 1.23", , 17 April 2007 (2007-04-17), pages 1-50, XP55001593, Retrieved from the Internet: URL:http://www.ngmn.org/uploads/media/NGMN _Informative_List_of_SON_Use_Cases.pdf [retrieved on 2011-06-29]
- NOKIA SIEMENS NETWORKS ET AL: "SON Use Case: Cell Phy_ID Automated Configuration", 3GPP DRAFT; R3-080376 (PHYID AUTOCONF), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sorrento, Italy; 20080205, 5 February 2008 (2008-02-05), XP050163582, [retrieved on 2008-02-05]

## Description

The present invention relates to the field of mobile telecommunication in a cellular radio network. In particular, the present invention relates to a method of handling a cell outage in a cellular radio network and cell operation unit, preferably a base station, to execute said method,

The outage of a base station or a cell can be compensated, e.g., by modified power settings or modified antenna configurations of neighbour base stations or neighbour cells. Current 3GPP radio network architectures support O&M (= Operation and Maintenance) nodes which are aware of cell topologies, i.e. a Network Element Manager (= NEM) has a full knowledge of the cell environment and can select all affected cells which should be involved for a compensation of the cell outage (3GPP = 3rd Generation Partnership Project). However, such a solution is only applicable for an O&M centric approach, For future radio networks it is planned to reduce network nodes and to consider operating systems without a NEM in a decentralised architecture. Such a decentralised scenario is under discussion in the standardisation of 3GPP for future evolved radio access networks.

Document "Use Cases Related to Self Organising Network. Overall Description", released April 17th 2007 by the NGMN Alliance, identifies in the context of self-organising networks the use cases of cell outage detection and compensation.

Document WO2008030171 discloses a network reconfigurator addressing service outage, to co-ordinately and dynamically change modifiable characteristics of plural remaining base stations.

Also, the technical contribution to 3GPP R3-080376 "SON Use Case: Cell Phy-ID Automated Configuration" discloses a method to inquire to neighbour base stations about further neighbour base stations' cells, and refers to related use of the LTE's X2 interface between base stations.

It is the object of the present invention to provide an improved method of handling a cell outage of a cell, and an improved cell operation unit.

The object of the present invention is achieved by a method of handling a cell outage of a cell of a cellular radio network comprising a plurality of cells and one or more base stations, whereby each cell is associated with a base station, the method comprising the steps of holding, by a first neighbour cell of the cell, information about the one or more neighbour cells of the first neighbour cell, detecting, by the first neighbour cell, the cell outage of the cell, determining, by the first neighbour cell, one or more further neighbour cells of the outaged cell, exchanging, by the first neighbour cell, control messages with the one or more further neighbour cells of the outaged cell, and co-ordinating, among the first neighbour cell and the determined one or more further neighbour cells, an adaptation of their radio control parameters for compensation of the cell outage by means of the exchanged control messages. The object of the present invention is further achieved by a cell operation unit, preferably a base station, adapted to operate a first neighbour cell of a cell of a cellular radio network comprising a plurality of cells and one or more base stations, whereby each cell is associated with a base station, the cell operation unit comprising a data base adapted to hold information about the one or more neighbour cells of the first neighbour cell, and a control unit adapted to detect a cell outage of the cell, determine one or more further neighbour cells of the outaged cell, exchange control messages with the one or more further neighbour cells of the outaged cell, and co-ordinate among the first neighbour cell and the determined one or more further neighbour cells an adaptation of their radio control parameters for compensation of the cell outage by means of the exchanged control messages.

A cell is a geographically defined area for providing a telecommunication service. A cellular radio network comprises one or more cells covering the area where the cellular radio network provides telecommunication services. In order to be able to provide a mobile terminal moving from a first cell to a second cell with an uninterrupted telecommunication service, the cell areas of adjacent cells (= neighbour cells) of a cellular radio network have an overlap where the hand-over (= HO) of a mobile terminal from a first cell to a second cell takes place.

Each cell is operated by an associated base station, i.e., each cell is associated with a base station. A base station can operate one or more associated cells, i.e., provide a telecommunication service in one or more cells, typically in three cells. A base station provides mobile terminals located inside a cell associated with the base station with telecommunication services. Since the term "cell" is a geographical term, a cell cannot execute functions. Therefore, when referring to a cell in the present description, a person skilled in the field of mobile telecommunications knows that this implies an associated cell operation unit, preferably an associated base station, which operates the cell, i.e., provides the cell with functions.

A cell outage is a breakdown of a cell, i.e., a cessation of proper functions within the cell so that the mobile terminals located in this cell cannot be provided with one or more telecommunication services anymore. An outaged cell is a cell which has passed into the state of a cell outage.

The present invention relates to a method of handling a cell outage described as in claim 1, and a cell operation unit as in claim 9. Preferred embodiments are described in the dependent claims.

A basic idea of the present invention is that all adjacent cells (= neighbour cells) of an outaged cell should be known by the neighbours of the outaged cell, if a decentralised scenario without O&M control is considered.

The present invention provides that a base station or cell which detects the outage of an adjacent cell has information about other affected neighbour cells, which is a precondition to co-ordinate the compensation of the outaged cell by a self-optimisation procedure in a fully decentralised architecture.

It is an advantage of the present invention that a co-ordinated algorithm can be used by cells in a decentralised architecture which are neighbour cells of an outaged cell in order to achieve an optimal coverage within the cell area of the outaged cell after few iterations.

Preferably, the present invention is implemented in eNBs which are base stations of a future 3GPP LTE access network (eNB = evolved Node B; LTE = Long Term Evolution).

Further advantages are achieved by the embodiments of the invention indicated by the dependent claims,

It is possible that a central network management unit which manages and/or administrates a plurality of base stations of the network collects the information about the neighbour cells of the first neighbour cell and transmits this collected information to the data base of the cell operation unit handling the first neighbour cell. It is also possible that the first neighbour cell itself gathers the information about the neighbour cells of the first neighbour cell. For example, the base station associated with the first neighbour cell sends inquiries regarding the neighbour cells of the first neighbour cell to the base stations associated with the neighbour cells of the first neighbour cell and receives information about the inquired neighbour cells from the base stations associated with the neighbour cells of the first neighbour cell.

According to a preferred embodiment of the invention, the first neighbour cell holds information about the neighbour cells of the one or more neighbour cells of the first neighbour cell. All stored neighbour cells of a cell "A", which is a neighbour of a cell "B", may be incorporated in the neighbour cell list of cell "B". It is possible that these additional neighbour cells are included in the neighbour cell list (= NCL) of each adjacent cell, or in a separate look up table.

According to a preferred embodiment of the invention, the information about the neighbour cells of the one or more neighbour cells of the first neighbour cell are gathered by a central network management unit and/or by the first neighbour cell. The central network management unit may be a central network unit, preferably located in a node of an Operation and Maintenance Centre (= OMC).

It is possible that the central network management unit collects the information about the neighbour cells of one or more neighbour cells of the first neighbour cell and transmits this information to the data base of the cell operation unit handling the first neighbour cell. It is also possible that the first neighbour cell itself gathers the information about the neighbour cells of its one or more neighbour cells by querying its one or more neighbour cells. It is advantageous that this collection process is executed before the cell outage of the cell. In this case, the cell that will outage can be queried itself about its neighbour cells. According to a preferred embodiment of the invention, after detecting the cell outage of the cell the first neighbour cell sends a first level query to the neighbour cells of the first neighbour cell. The first level query refers to the question whether the neighbour cells of the first neighbour cell are further neighbour cells of the outaged cell. In response to said first level query, the first neighbour cell receives a confirmation from those one or more neighbour cells of the first neighbour cell which are further neighbour cells of the outaged cell, The confirmation is a message which confirms that a neighbour cell of the first neighbour cell is a further neighbour cell of the outaged cell. It is possible that, in response to said first level query, the first neighbour cell receives a negation from those neighbour cells of the first neighbour cell which are not further neighbour cells of the outaged cell. It is also possible that, in response to said first level query, the first neighbour cell does not receive any response from those neighbour cells of the first neighbour cell which are not further neighbour cells of the outaged cell.

The term "first level" query refers to the fact that the neighbour cells of the first neighbour cells are at a distance of one cell hop from the first neighbour cell.

It is not necessary that the first neighbour cell gathers information about the neighbour cells of the one or more neighbour cells of the first neighbour cell before the cell outage.

Alternatively, e.g., if the gathering of this information before the cell outage is not possible, the first neighbour cell gathers information about the neighbour cells of the one or more neighbour cells of the first neighbour cell after detecting the cell outage. The first neighbour cell, having detected the cell outage, may send a request message to its own neighbour cells to check if they are also neighbours of the outaged cell or if they could provide information on their neighbour cells. Then these neighbour cells can be requested by the first neighbour cell if they are neighbours of the outaged cell, and so on. Furthermore, re-configuration settings can be exchanged between neighbour cells for a cell which is periodically switched on/off, e.g. for energy saving reasons.

Preferably, those neighbour cells of the first neighbour cell which are further neighbour cells of the outaged cell hold information about their one or more neighbour cells. It is possible that a central network management unit collects the information about the neighbour cells of those first neighbour cell which are further neighbour cells of the outaged cell and transmits this information to the data base of the one or more cell operation units handling those neighbour cells of the first neighbour cell which are further neighbour cells of the outaged cell. It is also possible that those neighbour cells of the first neighbour cell which are further neighbour cells of the outaged cell themselves gathers the information about their neighbour cells. Those neighbour cells of the first neighbour cell which are further neighbour cells of the outaged cell may send a second level query to their neighbour cells. The second level query refers to the question whether the neighbour cells of the neighbour cells ("the neighbours of the neighbours") of the first neighbour cell are further neighbour cells of the outaged cell. In response to said second level query, those neighbour cells of the first neighbour cell which are further neighbour cells of the outaged cell receive a confirmation from those of their one or more neighbour cells which are further neighbour cells of the outaged cell.

The term "second level" query refers to the fact that the neighbour cells of those neighbour cells of the first neighbour cell which are further neighbour cells of the outaged cell are at a distance of two cell hops from the first neighbour cell.

According to another preferred embodiment of the invention, a cell hop limit N is pre-defined, whereby N is an integer equal to or greater than one (N∈[1,2,3,...]), e.g., by a central network management unit. Further neighbour cells of the outaged cell which are located at a distance of k-1 cell hops from the first neighbour cell send a k-th level query to their neighbour cells, whereby k is an integer from one to N (k∈[1,...,N]). The k-th level query concerns the question whether their neighbour cells are further neighbour cells of the outaged cell. Only cells which are located at a distance of k cell hops from the first neighbour cell will process the k-th level query, i.e., check their relationship with regard to the outaged cell (neighbour or not). That means that if a cell which is located at a distance of k cell hops from the first neighbour cell is a further neighbour cell of the outaged cell, this cell may send a confirmation back to the sender of the query message. If a cell which is located at a distance of k cell hops from the first neighbour cell is not a further neighbour cell of the outaged cell, this cell may send a negation back to the sender of the query message or not answer at all.

According to another preferred embodiment of the invention, the first neighbour cell sends a request to the one or more further neighbour cells of the outaged cell for requesting the one or more further neighbour cells of the outaged cell to confirm the cell outage of the outaged cell. If a neighbour cell of the one or more further neighbour cells of the outaged cell can confirm the cell outage, this neighbour cell sends confirmation of the cell outage to the first neighbour cell. Thus, the first neighbour cell receives a confirmation of the cell outage of the outaged cell from the one or more further neighbour cells of the outaged cell.

A neighbour cell, which detects the outage of a cell, could at first request all affected neighbour cells, i.e., all neighbour cells of the outaged cell, to confirm the outage of this cell. The outage of a cell can be proved, e.g. by UE measurements, i.e. UEs are instructed by their serving cells to measure the signal strength of the supposedly outaged cell or the neighbour cells of the supposedly outaged cell send a keep alive request to the supposedly outaged cell (UE = User Equipment). The outage of a cell can also be proved by consideration of the number of connected UEs registered in the supposedly outaged cell and the successful or unsuccessful delivery of downlink and/or uplink data packets to the connected UEs. One or all proposed measures can improve the likelihood for the detection of an outaged cell, which limits unnecessary actions.

Preferably, a cell of the cellular radio network holds additional neighbour cell information about its one or more neighbour cells. The additional neighbour cell information may comprise one or more of the following: a neighbour cell or base station position, an antenna position and/or an antenna main lobe orientation (e.g., direction of beams) of the base station the neighbour cell is associated with, a neighbour cell class (macro, micro, pico, femto cell), a possibility to electrically control a neighbour antenna tilt, antenna type. The additional neighbour cell information could be very helpful for initiating the optimisation algorithm under optimal conditions.

Preferably, the first neighbour cell or a community of the first neighbour cell and the one or more further neighbour cells co-ordinate said adaptation of the radio control parameters for compensation of the cell outage. It is advantageous if the measures for compensation of an outaged cell are performed in a co-ordinated manner by all affected cells, i.e., by all neighbour cells of the outaged cell at a fixed point of time. The benefit of such a co-ordinated optimisation is that an optimal coverage of the area of the outaged cell and the mobile terminals in this area, respectively, can be obtained after few iteration steps. For example, the coverage could be made worse if each neighbour cell of the outaged cell performs its own strategy, e.g. by modification of antenna directions in an uncorrelated manner. Interference and hand-over problems could also occur without coordination of the adjacent cells. Therefore, an exchange of optimisation settings like "antenna tilt will be adjusted upwards by an angle of 2 degrees by cell x" can be used in the implemented optimisation algorithm to optimise the coverage of the outaged cell. During the optimisation procedure, measurements like interference and load should be exchanged for further potential improvements between the affected cells.

Further examples, where a co-ordinated optimisation of neighbours should be executed in a fully decentralised scenario, i.e. where all affected neighbours should be known, are "planned switching on/off of cells", e.g., for energy saving reasons, "load balancing", "inter-cell interference co-ordination", and "joint scheduler operation".

In a preferred embodiment, an appropriate signalling between base stations is used to search other affected neighbour cells.

These as well as further features and advantages of the invention will be better appreciated by reading the following detailed description of presently preferred exemplary embodiments taken in conjunction with accompanying drawings of which:
- Fig. 1: is a block diagram of cells of a cellular radio network according to an embodiment of the invention message; and
- Fig. 2: is a diagram of a cell operation unit according to an embodiment of the invention.

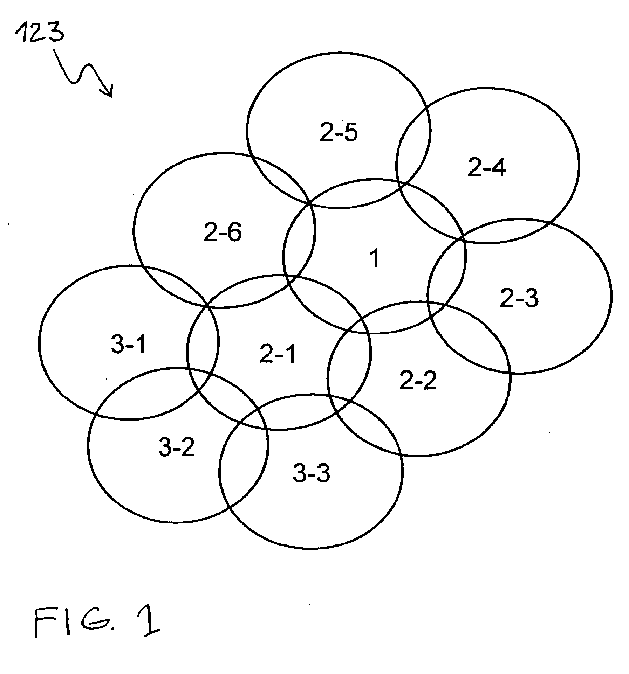

Fig. 1 shows a plurality of adjacent cells 1, 2-1, 2-2, 2-3, 2-4, 2-5, 2-6, 3-1, 3-2, 3-3 of a cellular radio network 123. The cellular radio network 123 may be a GSM, UMTS or another mobile telecommunications network (GSM = Global System for Global Communications, UMTS = Universal Mobile Telecommunications System). All cells 1, 2-1, 2-2, 2-3, 2-4, 2-5, 2-6, 3-1, 3-2, 3-3 transmit in an omni-directional manner. However, the invention is also valid for base stations which are sectorised, e.g., into three cells. The cell 1 is outaged for any reason. The first neighbour cell 2-1 detects the cell outage of the cell 1. The first neighbour cell 2-1 has access to information about the neighbours of the outaged cell 1.

At first, the first neighbour cell 2-1 informs all affected cells, i.e., all neighbour cells 2-2, 2-3, 2-4, 2-5, 2-6 of the outaged cell 1, and inquires if these cells 2-2, 2-3, 2-4, 2-5, 2-6 can confirm the outage of cell 1. Thereafter the first neighbour cell 2-1 initiates measures for compensation of the cell outage. The first neighbour cell 2-1 initiates an optimisation of a coverage of the outaged cell 1 in a co-ordinated manner, i.e. the first neighbour cell 2-1 sends to all affected cells 2-2, 2-3, 2-4, 2-5, 2-6 its own optimisation parameter settings and the point of time when the optimisation or optimisation cycle is to start.

Alternatively, if the first neighbour cell 2-1 does not know the neighbour cells which may be affected by the outage of the cell 1, the first neighbour cell 2-1 can apply appropriate signalling to inquire its own neighbour cells 2-2, 2-6, 3-1, 3-2, 3-3 if they can confirm a neighbour relation to the outaged cell 1. Then, the neighbour cells 2-2 and 2-6 of the first neighbour cell 2-1 will confirm that they have a neighbour relation to the outaged cell 1, e.g., by sending a confirmation message to the first neighbour cell 2-1. All the other neighbour cells 3-1, 3-2, 3-3 of the first neighbour cell 2-1 may send a response message that they are not concerned, i.e., that they do not have a neighbour relation to the outaged cell 1.

The neighbour cells 2-2 and 2-6 which have a neighbour relation to the outaged cell 1 may inquire in turn their neighbours if these cells have also a neighbour relation to the outaged cell 1. This inquiry of the respective neighbours of a cell can be continued until the rate of received confirmation messages has decreased below a pre-defined threshold. In the case depicted in Fig. 1, a positive response, i.e., a confirmation, can be expected from the remaining cells 2-4 and 2-5. Then, all neighbour cells of the outaged cell1 have been detected and no more confirmation messages will be received. Thereafter, the co-ordinated optimisation algorithm can be executed as described above.

Retrieving information about who is neighbour of the outaged cell 1 can be limited to the closer environment of the outaged cell 1 by introducing, e.g., a cell hop count which is increased with each new level of neighbourhood information inquiry. A fixed cell hop limit N is defined. Only cells which are located closer to the cell originally detecting the outage than the given, fixed cell hop limit N will answer. For example, only the cells 2-2 and 2-6 will send a positive response to the first neighbour cell 2-1, if the cell hop limit is set to one. Additionally, cell 2-3 and cell 2-5 can be detected as neighbours of the outaged cell 1, when the fixed cell hop limit N is set to two. This way, cell 2-4 is also inquired to send neighbourhood information for a cell hop limit N of 3.

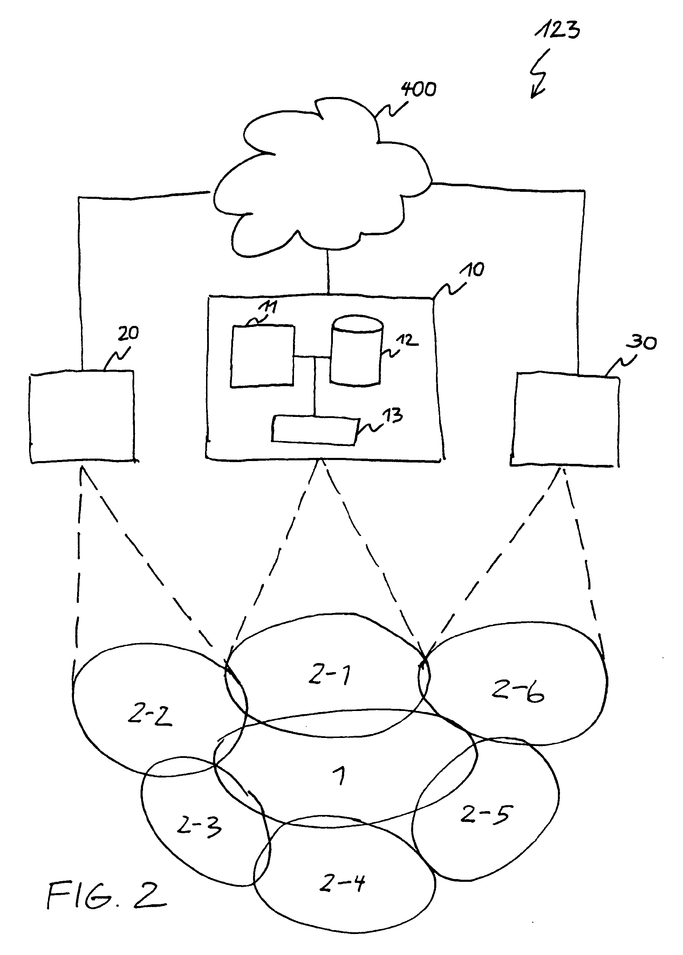

Fig. 2 shows the cellular radio network 123 comprising a plurality of cells 1, 2-1, 2-2, 2-3, 2-4, 2-5, 2-6, three base stations 10, 20, 30 operating the cells, and a network 400 connecting the three base stations 10, 20, 30. For simplicity reasons, only the cells which are adjacent to the outaged cell 1 and only associations of the base stations 10, 20, 30 with the cells 2-1, 2-2, 2-6 of the cellular radio network 123 are shown in Fig. 2. The skilled person knows that the cellular radio network 123 may comprise more cells and that each cell 2-1, 2-2, 2-3, 2-4, 2-5, 2-6 of the cellular radio network 123 is operated by a base station.

The base station 10 operates the first neighbour cell 2-1, the base station 20 operates the neighbour cell 2-2, the base station 30 operates the neighbour cell 2-6. The base stations 10, 20, 30 are connected via a network 400.

The base station 10 comprises a control unit 11, a data base 12 (e.g., a storage unit or a memory), and an antenna 13. The control unit 11 is composed of one or several inter-linked computers, i.e., a hardware platform, a software platform basing on the hardware platform and several application programs executed by the system platform formed by the software and hardware platform. The functionality of the control unit 11 is provided by the execution of these application programs. The application programs or a selected part of these application programs constitute a computer software product providing a cell outage handling service as described in this description of the present invention, when executed on the system platform. Further, such computer software product is constituted by a storage medium, e.g., the data base 12, storing these application programs or said selected part of application programs.

The data base 12 holds information about the one or more neighbour cells 1, 2-2, 2-6 of the first neighbour cell 2-1, In addition, the data base 12 holds information about the neighbour cells of the neighbour cells 1, 2-2, 2-6 of the first neighbour cell 2-1.

The control unit 11 detects a cell outage of the cell 1. The detection of the cell outage of the cell 1 by the control unit 11 may be based on a monitoring of hand-over reports from UEs which are received by the control unit 11. The control unit 11 determines the further neighbour cells 2-2. 2-3, 2-4, 2-5, 2-6 of the outaged cell 1, e.g., by accessing the data base 12 where the data of all neighbouring cells of the outaged cell 1 are available.

Then, the control unit 11 exchanges control messages with the further neighbour cells 2-2, 2-3, 2-4, 2-5, 2-6 of the outaged cell 1. Based on the exchanged control messages, the control unit 11 co-ordinates among the first neighbour cell 2-1 and the determined further neighbour cells 2-2, 2-3, 2-4, 2-5, 2-6 an adaptation of the radio control parameters of the neighbour cells 2-1, 2-2, 2-3, 2-4, 2-5, 2-6 of the outaged cell 1 for compensation of the cell outage.

## Claims

1. A method of handling a cell outage of a cell (1) of a cellular radio network (123) comprising a plurality of cells (1, 2-1, 2-2, 2-3, 2-4, 2-5, 2-6, 3-1, 3-2, 3-3) and one or more base stations (10, 20, 30), whereby each cell (1, 2-1, 2-2, 2-3, 2-4, 2-5, 2-6, 3-1, 3-2, 3-3) is associated with a base station (10, 20, 30), the method comprising the steps of:
holding, by a first neighbour cell (2-1) of the cell (1), information about one or more neighbour cells (1, 2-2, 2-6, 3-1, 3-2, 3-3) of the first neighbour cell detecting, by the first neighbour cell (2-1), the cell outage of the cell (1); after detecting the cell outage of the cell (1), sending a first level query, by the first neighbour cell (2-1), to its neighbour cells (2-2, 2-6, 3-1, 3-2, 3-3) whether the neighbour cells (2-2, 2-6, 3-1, 3-2, 3-3) of the first neighbour cell (2-1) are further neighbour cells of the outaged cell (1); in response to said first level query, receiving by the first neighbour cell (2-1) a confirmation from those one or more neighbour cells (2-2, 2-6) of the first neighbour cell (2-1) which are further neighbour cells of the outaged cell (1);
determining, by the first neighbour cell (2-1), one or more further neighbour cells (2-2, 2-3, 2-4, 2-5, 2-6) of the outaged cell (1);
exchanging, by the first neighbour cell (2-1), control messages with the one or more further neighbour cells (2-2, 2-3, 2-4, 2-5, 2-6) of the outaged cell (1); and
co-ordinating, among the first neighbour cell (2-1) and the determined one or more further neighbour cells (2-2, 2-3, 2-4, 2-5, 2-6), an adaptation of their radio control parameters for compensation of the cell outage by means of the exchanged control messages.

2. The method of claim 1,
**characterised in**
**that** the method further comprises the steps of: holding, by the first neighbour cell (2-1), information about the neighbour cells of its one or more neighbour cells (1, 2-2, 2-6, 3-1, 3-2, 3-3).

3. The method of claim 2,
**characterised in**
**that** the method further comprises the steps of:
gathering said information about the neighbour cells of the one or more neighbour cells (1, 2-2, 2-6, 3-1, 3-2. 3-3) of the first neighbour cell (2-1) by a central network management unit and/or by the first neighbour cell (2-1).

4. The method of claim 1,
**characterised in**
**that** the method further comprises the steps of:
holding, by said neighbour cells (2-2, 2-6) of the first neighbour cell (2-1) which are further neighbour cells of the outaged cell (1), information about their one or more neighbour cells; and
sending a second level query, by said neighbour cells (2-2, 2-6) of the first neighbour cell (2-1) which are further neighbour cells of the
outaged cell (1), to their neighbour cells whether their neighbour cells are further neighbour cells of the outaged cell (1); and
in response to said second level query, receiving, by said neighbour cells (2-2, 2-6) of the first neighbour cell (2-1) which are further neighbour cells of the outaged cell (1), a confirmation from those of their one or more neighbour cells which are further neighbour cells of the outaged cell (1).

5. The method of claim 1 or 4,
**characterised in**
**that** the method further comprises the steps of:
pre-defining a cell hop limit N, whereby N is an integer equal to or greater than one;
sending a k-th level query, by further neighbour cells of the outaged cell (1) which are located at a distance of k-1 cell hops from the first neighbour cell (2-1), to their neighbour cells whether their neighbour cells are further neighbour cells of the outaged cell (1), whereby k is an integer from one to N; and
processing of the k-th level query only by cells which are located at a distance of k cell hops from the first neighbour cell (2-1).

6. The method of claim 1,
**characterised in**
**that** the method further comprises the step of:
sending, by the first neighbour cell (2-1), a request to the one or more further neighbour cells (2-2, 2-3, 2-4, 2-5, 2-6) of the outaged cell (1) for requesting the one or more further neighbour cells (2-2, 2-3, 2-4, 2-5, 2-6) of the outaged cell (1) to confirm the cell outage of the outaged cell (1); and
receiving, by the first neighbour cell (2-1), a confirmation of the cell outage of the outaged cell (1) from the one or more further neighbour cells (2-2, 2-3, 2-4, 2-5, 2-6) of the outaged cell (1).

7. The method of one of the claims 1, 2 or 4,
**characterised in**
**that** the method further comprises the steps of:
holding, by a cell of the cellular radio network (123), additional neighbour cell information about its one or more neighbour cells, whereby said additional neighbour cell information comprises one or more of the following: a neighbour cell or base station position, an antenna position and/or an antenna main lobe orientation of the base station the neighbour cell is associated with, a neighbour cell class, a possibility to electrically control a neighbour antenna tilt.

8. The method of claim 1,
**characterised in**
**that** the method further comprises the step of:
co-ordinating said adaptation of the radio control parameters for compensation of the cell outage by the first neighbour cell (2-1) or commonly by the first neighbour cell (2-1) and the one or more further neighbour cells.

9. A cell operation unit (10), preferably a base station, adapted to operate a first neighbour cell (2-1) of a cell (1) of a cellular radio network (123) comprising a plurality of cells (1, 2-1, 2-2, 2-3, 2-4, 2-5, 2-6, 3-1, 3-2, 3-3) and one or more base stations (10, 20, 30), whereby each cell (1, 2-1, 2-2, 2-3, 2-4, 2-5, 2-6, 3-1, 3-2, 3-3) is associated with a base station (10, 20, 30), the cell operation unit (10) comprising a data base (12) adapted to hold information about the one or more neighbour cells (1, 2-2, 2-6, 3-1, 3-2, 3-3) of the first neighbour cell (2-1), and
a control unit (11) adapted to detect a cell outage of the cell (1), send, after detecting the cell outage of the cell (1), a first level query to the neighbour cells (2-2, 2-6, 3-1, 3-2, 3-3) of the first neighbour cell (2-1) whether the neighbour cells (2-2, 2-6, 3-1, 3-2, 3-3) of the first neighbour cell (2-1) are further neighbour cells of the outaged cell (1); receive, in response to said first level query, a confirmation from those one or more neighbour cells (2-2, 2-6) of the first neighbour cell (2-1) which are further neighbour cells of the outaged cell (1);
further adapted to determine one or more further neighbour cells (2-2, 2-3, 2-4, 2-5, 2-6) of the outaged cell (1);
further adapted to exchange control messages with the one or more further neighbour cells (2-2, 2-3, 2-4, 2-5, 2-6) of the outaged cell (1); and
further adapted to co-ordinate among the first neighbour cell (2-1) and the determined one or more further neighbour cells (2-2, 2-3, 2-4, 2-5, 2-6) an adaptation of their radio control parameters for compensation of the cell outage by means of the exchanged control messages.

## Patentansprüche

1. Verfahren zur Handhabung des Ausfalls einer Zelle (1) eines zellularen Funknetzwerks (123) mit einer Mehrzahl von Zellen (1, 2-1, 2-2, 2-3, 2-4, 2-5, 2-6, 3-1, 3-2, 3-3) und einer oder mehreren Basisstationen (10, 20, 30), wobei jede Zelle (1, 2-1, 2-2, 2-3, 2-4, 2-5, 2-6, 3-1, 3-2, 3-3) mit einer Basisstation (10, 20, 30) assoziiert ist, wobei das Verfahren die folgenden Schritte umfasst:
Speichern, durch eine erste Nachbarzelle (2-1) der Zelle (1) von informationen über eine oder mehrere Nachbarzellen (1, 2-2, 2-6, 3-1, 3-2, 3-3) der ersten Nachbarzelle;
Erkennen, durch die erste Nachbarzelle (2-1), des Ausfalls der Zelle (1);
nach Erkennen des Ausfalls der Zelle (1), Senden einer Ein-Hopser-Abfrage, durch die erste Nachbarzelle (2-1) an deren Nachbarzellen (2-2, 2-6, 3-1, 3-2, 3-3), ob die Nachbarzellen (2-2, 2-6, 3-1, 3-2, 3-3) der ersten Nachbarzelle (2-1) weitere Nachbarzellen der ausgefallenen Zelle (1) sind;
in Antwort auf die besagte Ein-Hopser-Abfrage, Empfangen, durch die erste Nachbarzelle (2-1), einer Bestätigung von derjenigen einen oder denjenigen mehreren Zellen (2-2, 2-6) der ersten Nachbarzelle (2-1), welche weitere Nachbarzellen der ausgefallenen Zelle (1) sind;
Ermitteln, durch die erste Nachbarzelle (2-1), einer oder mehrerer weiterer Nachbarzellen (2-2, 2-3, 2-4, 2-5, 2-6) der ausgefallenen Zelle (1);
Austauschen, durch die erste Nachbarzelle (2-1), von Steuernachrichten mit der einen oder den mehreren weiteren Nachbarzellen (2-2, 2-3, 2-4, 2-5, 2-6) der ausgefallenen Zelle (1); und
Koordinieren, zwischen der ersten Nachbarzelle (2-1) und der ermittelten einen oder den ermittelten mehreren Nachbarzellen (2-2, 2-3, 2-4, 2-5, 2-6), einer Anpassung deren Funksteuerparameter anhand der ausgetauschten Steuernachrichten, um den Zellenausfall zu kompensieren.

2. Verfahren nach Anspruch 1,
**dadurch gekennzeichnet,**
**dass** das Verfahren weiterhin den folgenden Schritt umfasst:
Speichern, durch die erste Nachbarzelle (2-1), von Informationen über die Nachbarzellen ihrer einen oder mehreren Nachbarzellen (1, 2-2, 2-6, 3-1, 3-2, 3-3).

3. Verfahren nach Anspruch 2,
**dadurch gekennzeichnet,**
**dass** das Verfahren weiterhin den folgenden Schritt umfasst:
Erfassen der besagten Informationen über die Nachbarzellen einer oder mehrerer Nachbarzellen (1, 2-2, 2-6, 3-1, 3-2, 3-3) der ersten Nachbarzelle (2-1) durch eine zentrale Netzwerkverwaltungseinheit und/oder durch die erste Nachbarzelle (2-1).

4. Verfahren nach Anspruch 1,
**dadurch gekennzeichnet,**
**dass** das Verfahren weiterhin die folgenden Schritte umfasst:
Speichern, durch die besagten Nachbarzellen (2-2, 2-6) der ersten Nachbarzelle (2-1), welche weitere Nachbarzellen der ausgefallenen Zelle (1) sind, von Informationen über deren eine oder mehreren Nachbarzellen; und
Senden einer Zwei-Hopser-Abfrage, durch die besagten Nachbarzellen (2-2, 2-6) der besagten ersten Nachbarzelle (2-1), welche weitere Nachbarzellen der ausgefallenen Zelle (1) sind, an deren Nachbarzellen, ob deren Nachbarzellen weitere Nachbarzellen der ausgefallenen Zelle (1) sind; und
in Antwort auf die besagte Zwei-Hopser-Abfrage, Empfangen, durch die besagten Nachbarzellen (2-2, 2-6) der ersten Nachbarzelle (2-1), welche weitere Nachbarzellen der ausgefallenen Zelle (1) sind, einer Bestätigen von derjenigen einen oder denjenigen mehreren deren Nachbarzellen, welche weitere Nachbarzellen der ausgefallenen Zelle (1) sind.

5. Verfahren nach Anspruch 1 oder 4,
**dadurch gekennzeichnet,**
**dass** das Verfahren weiterhin die folgenden Schritte umfasst:
Vordefinieren eines Zellen-Hopanzahl-Grenzwertes N, wobei N eine ganze Zahl gleich oder größer als eins ist;
Senden einer k-Hopser-Abfrage, durch weitere Nachbarzellen der ausgefallenen Zelle (1), welche sich in einer Entfernung von k-1 Zellen-Hops von der ersten Nachbarzelle (2-1) befinden, an deren Nachbarzellen, ob deren Nachbarzellen weitere Nachbarzellen der ausgefallenen Zelle (1) sind, wobei k eine ganze Zahl zwischen eins und N ist; und
Verarbeiten der k-Hopser-Abfrage nur durch diejenigen Zellen, welche sich in einer Entfernung von k Zellen-Hops von der ersten Nachbarzelle (2-1) befinden.

6. Verfahren nach Anspruch 1,
**dadurch gekennzeichnet,**
**dass** das Verfahren weiterhin die folgenden Schritte umfasst:
Senden, durch die erste Nachbarzelle (2-1) einer Anforderung an die eine oder die mehreren weiteren Nachbarzellen (2-2. 2-3, 2-4, 2-5, 2-6) der ausgefallenen Zelle (1), um von der einen oder den mehreren weiteren Nachbarzellen (2-2, 2-3, 2-4, 2-5, 2-6) der ausgefallenen Zelle (1) eine Bestätigung des Zellenausfalls der ausgefallenen Zelle (1) anzufordern; und
Empfangen, durch die erste Nachbarzelle (2-1), einer Bestätigung des Zellenausfalls der ausgefallenen Zelle (1) von der einen oder den mehreren weiteren Nachbarzellen (2-2, 2-3, 2-4, 2-5, 2-6) der ausgefallenen Zelle (1).

7. Verfahren nach einem der Ansprüche 1, 2 oder 4,
**dadurch gekennzeichnet,**
**dass** das Verfahren weiterhin den folgenden Schritt umfasst:
Speichern, durch eine Zelle des zellularen Funknetzwerks (123), von zusätzlichen Nachbarzelleninformationen über ihre eine oder mehreren Nachbarzellen, wobei die besagten zusätzlichen Nachbarzelleninformationen eines oder mehrere der folgenden Kriterien enthalten: Die Position einer Nachbarzelle oder einer Basisstation, die Position einer Antenne und/oder die Ausrichtung der Hauptkeule einer Antenne der mit der Nachbarzelle assoziierten Basisstation, die Klasse einer Nachbarzellen, die Möglichkeit der elektrischen Steuerung der Neigung einer Nachbarantenne.

8. Verfahren nach Anspruch 1,
**dadurch gekennzeichnet,**
**dass** das Verfahren weiterhin de folgenden Schritt umfasst:
Koordinieren der besagten Anpassung der Funksteuerparameter für die Kompensation des Zellenausfalls durch die erste Nachbarzelle (2-1) oder gemeinhin durch die erste Nachbarzelle (2-1) und die eine oder die mehreren weiteren Nachbarzellen.

9. Einheit für den Betrieb von Zellen (10), vorzugsweise eine Basisstation, ausgelegt für den Betrieb einer ersten Nachbarzelle (2-1) einer Zelle (1) eines zellularen Funknetzwerks (123) mit einer Mehrzahl von Zellen (1, 2-1, 2-2, 2-3, 2-4, 2-5, 2-6, 3-1, 3-2, 3-3) und einer oder mehreren Basisstationen (10, 20, 30), wobei jede Zelle (1, 2-1, 2-2, 2-3, 2-4, 2-5, 2-6, 3-1, 3-2, 3-3) mit einer Basisstation (10, 20, 30) assoziiert ist, wobei die Einheit für den Betrieb von Zellen (10) umfasst:
Eine Datenbank (12), ausgelegt für das Speichern von Informationen über die eine oder die mehreren Nachbarzellen (1, 2-2, 2-6, 3-1, 3-2, 3-3) der ersten Nachbarzelle (2-1), und
eine Steuereinheit (11), ausgelegt für das Erkennen eines Zellenausfalls der Zelle (1), das Senden, nach Erkennen des Zellenausfalls der Zelle (1), einer Ein-Hopser-Abfrage an die Nachbarzellen (2-2, 2-6, 3-1, 3-2, 3-3) der ersten Nachbarzelle (2-1), ob die Nachbarzellen (2-2, 2-6, 3-1, 3-2, 3-3) der ersten Nachbarzelle (2-1) weitere Nachbarzellen der ausgefallenen Zelle (1) sind; das Empfangen, in Antwort auf die besagte Ein-Hopser-Abfrage, einer Bestätigung von derjenigen einen oder denjenigen mehreren Nachbarzellen (2-2, 2-6) der ersten Nachbarzelle (2-1), welche weitere Nachbarzellen der ausgefallenen Zelle (1) sind;
weiterhin dazu ausgelegt, eine oder mehrere weitere Nachbarzellen (2-2, 2-3, 24, 2-6, 2-6) der ausgefallenen Zelle (1) zu ermitteln;
weiterhin dazu ausgelegt, Steuernachrichten mit der einen oder den mehreren weiteren Nachbarzellen (2-2, 2-3, 2-4, 2-5, 2-6) der ausgefallenen Zelle (1) auszutauschen; und
weiterhin dazu ausgelegt, zwischen der ersten Nachbarzelle (2-1) und der ermittelten einen oder den ermittelten mehreren weiteren Nachbarzellen (2-2, 2-3, 2-4, 2-5, 2-6) eine Anpassung deren Funksteuerparameter zu koordinieren, um den Zellenausfall anhand der ausgetauschten Steuernachrichten zu kompensieren.

## Revendications

1. Procédé de traitement d'une panne de cellule d'une cellule (1) d'un réseau radiocellulaire (123) comprenant une pluralité de cellules (1, 2-1, 2-2, 2-3, 2-4, 2-5, 2-6, 3-1, 3-2, 3-3) et une ou plusieurs stations de base (10, 20, 30), dans lesquelles chaque cellule (1, 2-1, 2-2, 2-3, 2-4, 2-5, 2-6, 3-1, 3-2, 3-3) est associée à une station de base (10, 20, 30), le procédé comprenant les étapes suivantes :
contenir, au moyen d'une première cellule voisine (2-1) de la cellule (1), des informations sur une ou plusieurs cellules voisines (1, 2-2, 2-6, 3-1, 3-2, 3-3) de la première cellule voisine,
détecter, au moyen de la première cellule voisine (2-1), la panne de cellule de la cellule (1) ;
après la détection de la panne de cellule de la cellule (1), envoyer une requête de premier niveau, au moyen de la première cellule voisine (2-1), à ses cellules voisines (2-2, 2-6, 3-1, 3-2, 3-3) si les cellules voisines (2-2, 2-6, 3-1, 3-2, 3-3) de la première cellule voisine (2-1) sont d'autres cellules voisines de la cellule en panne (1);
en réponse à ladite requête de premier niveau, recevoir au moyen de la première cellule voisine (2-1) une confirmation provenant desdites une ou plusieurs cellules voisines (2-2, 2-6) de la première cellule voisine (2-1) qui sont d'autres cellules voisines de la cellule en panne (1) ;
déterminer, au moyen de la première cellule voisine (2-1), une ou plusieurs autres cellules voisines (2-2, 2-3, 2-4, 2-5, 2-6) de la cellule en panne (1) ;
échanger, au moyen de la première cellule voisine (2-1), des messages de commande avec l'une ou les autres cellules voisines (2-2, 2-3, 2-4, 2-5, 2-6) de la cellule en panne (1) ; et
coordonner, parmi la première cellule voisine (2-1) et la ou les autres cellules voisines déterminées (2-2, 2-3, 2-4, 2-5, 2-6), une adaptation de leurs paramètres de commande radio pour compenser la panne de cellule au moyen des messages de commande échangés.

2. Procédé selon la revendication 1,
**caractérisé en ce que**
le procédé comprend en outre les étapes suivantes :
contenir, au moyen de la première cellule voisine (2-1), des informations sur les cellules voisines d'une ou de plusieurs cellules voisines (1, 2-2, 2-6, 3-1, 3-2, 3-3) de celle-ci.

3. Procédé selon la revendication 2,
**caractérisé en ce que**
le procédé comprend en outre l'étape suivante :
rassembler lesdites informations sur les cellules voisines de la ou les cellules voisines (1, 2-2, 2-6, 3-1, 3-2, 3-3) de la première cellule voisine (2-1) au moyen d'une unité de gestion de réseau centrale et/ou au moyen de la première cellule voisine (2-1).

4. Procédé selon la revendication 1,
**caractérisé en ce que**
le procédé comprend en outre les étapes suivantes :
contenir, au moyen desdites cellules voisines (2-2, 2-6) de la première cellule voisine (2-1) qui sont d'autres cellules voisines de la cellule en panne (1), des informations sur leurs une ou plusieurs cellules voisines ; et
envoyer une requête de deuxième niveau, au moyen desdites cellules voisines (2-2, 2-6) de la première cellule voisine (2-1) qui sont d'autres cellules voisines de la cellule en panne (1), à leurs cellules voisines si leurs cellules voisines sont d'autres cellules voisines de la cellule en panne (1) ; et
en réponse à ladite requête de deuxième niveau, recevoir, au moyen desdites cellules voisines (2-2, 2-6) de la première cellule voisine (2-1) qui sont d'autres cellules voisines de la cellule en panne (1), une confirmation de leurs une ou plusieurs cellules voisines qui sont d'autres cellules voisines de la cellule en panne (1).

5. Procédé selon la revendication 1 ou 4,
**caractérisé en ce que**
le procédé comprend en outre les étapes suivantes :
prédéfinir une limite de saut de cellule N, où N est un nombre entier supérieur ou égal à un ;
envoyer une requête de k^{ème} niveau, au moyen d'autres cellules voisines de la cellule en panne (1) qui sont situées à une distance de k-1 sauts de cellule de la première cellule voisine (2-1), leurs cellules voisines si leurs cellules voisines sont d'autres cellules voisines de la cellule en panne (1), où k est un nombre entier compris entre un et N ; et
traiter la requête de k^{ème} niveau seulement au moyen des cellules qui sont situées à une distance de k sauts de cellule de la première cellule voisine (2-1).

6. Procédé selon la revendication 1,
**caractérisé en ce que**
le procédé comprend en outre l'étape suivante :
envoyer, au moyen de la première cellule voisine (2-1), une demande à la ou les autres cellules voisines (2-2, 2-3, 2-4, 2-5, 2-6) de la cellule en panne (1) pour demander à la ou les autres cellules voisines (2-2, 2-3, 2-4, 2-5, 2-6) de la cellule en panne (1) de confirmer la panne de cellule de la cellule en panne (1) ; et
recevoir, au moyen de la première cellule voisine (2-1), une confirmation de la panne de cellule de la cellule en panne (1) provenant de la ou les autres cellules voisines (2-2, 2-3, 2-4, 2-5, 2-6) de la cellule en panne (1).

7. Procédé selon la revendication 1, 2 ou 4,
**caractérisé en ce que**
le procédé comprend en outre les étapes suivantes :
contenir, au moyen d'une cellule du réseau radiocellulaire (123), des informations de cellules voisines supplémentaires sur une ou plusieurs cellules voisines de celle-ci, dans lesquelles lesdites informations de cellules voisines supplémentaires comprennent un ou plusieurs éléments parmi ce qui suit : une position de cellule voisine ou de station de base, une position d'antenne et/ou une orientation du lobe principal de l'antenne de la station de base avec laquelle la cellule voisine est associée, une classe de cellule voisine, une possibilité de commander électriquement une inclinaison d'antenne voisine.

8. Procédé selon la revendication 1,
**caractérisé en ce que**
le procédé comprend en outre l'étape suivante :
coordonner ladite adaptation des paramètres de commande radio pour compenser la panne de cellule au moyen de la première cellule voisine (2-1) ou habituellement au moyen de la première cellule voisine (2-1) et de la ou les autres cellules voisines.

9. Unité de fonctionnement de cellule (10), de préférence une station de base, adaptée pour faire fonctionner une première cellule voisine (2-1) d'une cellule (1) d'un réseau radiocellulaire (123) comprenant une pluralité de cellules (1, 2-1, 2-2, 2-3, 2-4, 2-5, 2-6, 3-1, 3-2, 3-3) et une ou plusieurs stations de base (10, 20, 30), dans lesquelles chaque cellule (1, 2-1, 2-2, 2-3, 2-4, 2-5, 2-6, 3-1, 3-2, 3-3) est associée à une station de base (10, 20, 30), l'unité de fonctionnement de cellule (10) comprenant une base de données (12) adaptée pour contenir des informations sur la ou les cellules voisines (1, 2-2, 2-6, 3-1, 3-2, 3-3) de la première cellule voisine (2-1), et une unité de commande (11) adaptée pour détecter une panne de cellule de la cellule (1), pour envoyer, après la détection de la panne de cellule de la cellule (1), une requête de premier niveau aux cellules voisines (2-2, 2-6, 3-1, 3-2, 3-3) de la première cellule voisine (2-1) si les cellules voisines (2-2, 2-6, 3-1, 3-2, 3-3) de la première cellule voisine (2-1) sont d'autres cellules voisines de la cellule en panne (1) ; pour recevoir, en réponse à ladite requête de premier niveau, une confirmation provenant desdites une ou plusieurs cellules voisines (2-2, 2-6) de la première cellule voisine (2-1) qui sont d'autres cellules voisines de la cellule en panne (1) ; adaptée en outre pour déterminer une ou plusieurs autres cellules voisines (2-2, 2-3, 2-4, 2-6, 2-6) de la cellule en panne (1) ;
adaptée en outre pour échanger des messages de commande avec la ou les autres cellules voisines (2-2, 2-3, 2-4, 2-5, 2-6) de la cellule en panne (1) ; et
adaptée en outre pour coordonner, parmi la première cellule voisine (2-1) et la ou les autres cellules voisines déterminées (2-2, 2-3, 2-4, 2-5, 2-6), une adaptation de leurs paramètres de commande radio pour compenser la panne de cellule au moyen des messages de commande échangés.
